Europäisches Patentamt

European Patent Office

Office européen des brevets

(11) Publication number: **0 502 206 A1**

# EUROPEAN PATENT APPLICATION
## published in accordance with Art. 158(3) EPC

(21) Application number: 91916225.5

(22) Date of filing: **18.09.91**

(86) International application number:
**PCT/JP91/01240**

(87) International publication number:
**WO 92/05493 (02.04.92 92/08)**

(51) Int. Cl.⁵: **G06F 12/08**, G06F 12/12

(30) Priority: **18.09.90 JP 246102/90**

(43) Date of publication of application:
**09.09.92 Bulletin 92/37**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **TAKAHASHI, Hiromasa, c/o Fujitsu**
**Limited**
**1015, Kamikodanaka, Nakahara-ku**
**Kawasaki-shi, Kanagawa 211(JP)**
Inventor: **IINO, Hideyuki, c/o Fujitsu Limited**
**1015, Kamikodanaka, Nakahara-ku**
**Kawasaki-shi, Kanagawa 211(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) SYSTEM EQUIPPED WITH PROCESSOR AND CACHE MEMORY, AND METHOD OF CONTROLLING SAID CACHE MEMORY.

(57) A system comprising a cache memory (2) connected to a processor (1) and a main storage (3), wherein the processor includes means 1A for outputting a discrimination signal S designating whether the access to be made to the cache memory is a data access of continuous addresses or a data access of discontinuous addresses, and the cache memory (2) includes means 2A for handling errors in its operation on the basis of the outputted discrimination signal. During access to data of discontinuous addresses, control is so made as to suppress unnecessary accesses to the main storage. In this way, penalty at the time of a failure of a cache operation is reduced and eventually, efficiency of the system can be improved as a whole by accomplishing a high speed operation

Fig.1a

Fig.2a

WORD

ENTRY

|  | 1 | 2 | 3 | 4 |
|---|---|---|---|---|
| 0 |  |  |  |  |
| 1 |  |  |  | EL 0 |
| 2 | X | X | X | X | ← MISS |
| 3 | EL5 | EL6 | EL7 | EL8 |

| 8 BYTE | 8 BYTE | 8 BYTE | 8 BYTE |

Fig.3a

WORD

ENTRY

|  | 1 | 2 | 3 | 4 |
|---|---|---|---|---|
| 0 |  | EL0 |  |  |
| 1 |  | EL1 |  |  |
| 2 |  | EL2 |  |  |
| 3 |  | EL3 |  |  |

| 8 BYTE | 8 BYTE | 8 BYTE | 8 BYTE |

Fig.3b

CLOCK

DATA — | e0 | e1 | e2 | e3 | e4 | e5 | e6 | e7 | e8 |

CACHE MEMORY ACCESS

TECHNICAL FIELD

The present invention relates to a cache memory control system and, particularly, to a technology of controlling a cache memory connected to a processor that gains access to data such as vector data.

If a cache memory that operates normally is connected to a processor that gains access to particular data such as a vector operation type processor that gains access to vector data, the function of the system as a whole is often lowered because of a penalty in the case of a cache miss, thereby making it difficult to increase the speed of processing. It has therefore been desired to provide a control system that reduces the penalty in the case of a cache miss and maintains a high-speed operation even when a cache memory that normally operates is connected to a processor that gains access to vector data.

BACKGROUND ART

The cache memory is generally connected between a low speed main memory and a high speed processor such that the processor is allowed to gain access to the data at a high speed.

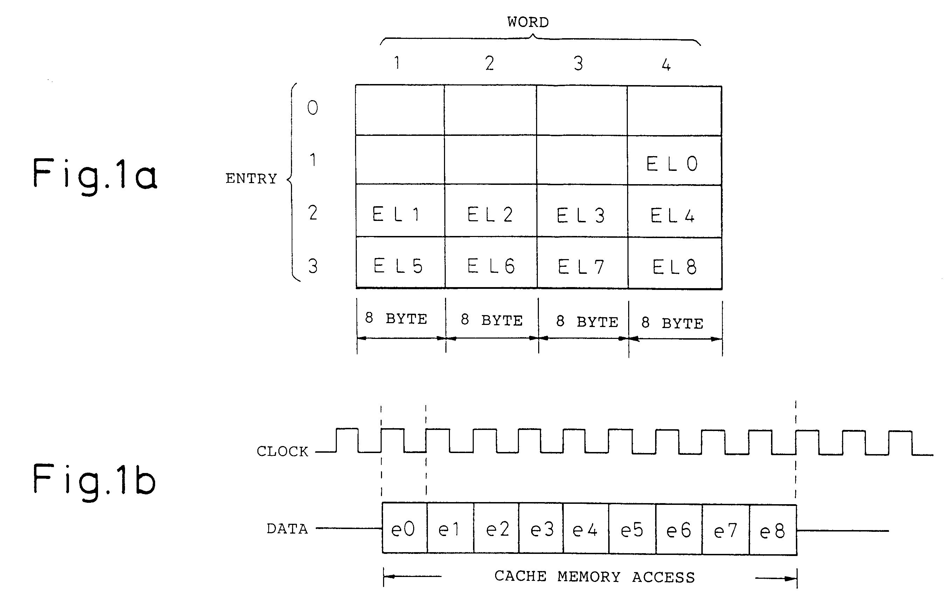

The cache memory is divided into "entries" called lines as shown in, for example, Figs. 1a and 1b. Each entry has a line size of, usually, about 16 bytes or about 32 bytes. In the case of a line size of, for example, 32 bytes or a double precision of 8 bytes as shown in Fig. 1a, four words (data) are stored in each line.

Outline of the cache memory operation is described with reference to a cache memory of a copy back system.

When data exists in the cache memory under the condition that a processor that controls the cache memory is gaining access to the cache memory, i.e., in the case of a "cache hit", the entry including this data is read out from the cache memory at the time of reading, and the above data is written onto the above entry in the cache memory at the time of writing.

On the other hand, when the data to which access is made does not exist in the cache memory, i.e., in the case of a "cache miss", in general, the entry is replaced in the cache memory. Concretely speaking, the corresponding entry is read out from the main memory and is replaced by a corresponding entry in the cache memory.

In this case, the data of an amount of one entry (four data, i.e., data of 32 bytes in the case of double precision data of 8 bytes) must be read out from the main memory to be stored in the cache memory. That is, in the case of a cache miss at the time of read access, the data read out from the main memory is not the data to which access is made but consists of data (32 bytes) of one entry that includes the above data. Similarly, even in the case of a cache miss at the time of write access, an entry (32 bytes of data) including the miss-hit data is read out from the main memory, replaced for the corresponding entry in the cache memory and, then, the write data are written thereon.

In an ordinary cache memory, when the processor gains access to the instruction or data, in general, the data to which access is made next are stored in many cases in an address near the preceding data. Even when the entry data are replaced at the time of a cache miss, the data of the replaced entry is hit with a relatively large probability by an access that is made subsequently.

In the case of memory access for the vector data effected by, for example, the processor of the vector operation type, problems arise as will be described later.

Here, the vector data stands for a set of data of a kind used for the arithmetic operation and in which each of the data is called "element" of vector data. In general, what are frequently used for gaining access to the vector data are a sequential data access and a data access with distance. In the case of, for example, double precision data of 8 bytes, the sequential data access stands for an access mode such that addresses for the elements are arranged maintaining a distance (stride) of 8 bytes and the elements of vector data are sequentially stored in the memory. On the other hand, the data access with distance stands for an access mode such that the elements of vector data are arranged not maintaining a distance (stride) of 8 bytes but maintaining a value that is twice as great and the elements of vector data are stored in the memory maintaining a predetermined gap (distance). For the sake of convenience, the data access mode represented by the data access with distance is called "non-sequential data access" in contrast to "sequential data access".

In the case of sequential data access, one entry of data including data (i.e., element) to which access is made are read out from the main memory and are replaced by the corresponding entry in the cache memory according to a process that is usually performed at the time of a cache miss. In this case, however, the entry that is substituted includes data (element) to which access will be gained. Therefore, the data is necessarily hit when access is made thereto. In other words, in the case of the sequential data access, the data to which access will be made next is stored in an address neighboring the address of the preceding data. Therefore, even when the entry data are replaced according to the processing at the time of a cache miss as described above, the data of the replaced entry is reliably hit by the subsequent access, thereby retaining the efficiency of the whole system.

In the case of the non-sequential data access, on the other hand, one entry of data is replaced at the time of a cache miss as described above. In this case, however, the elements of vector data are stored maintaining a predetermined distance (stride), and the replaced entry does not include the data (element) to which access will be gained next. In other words, in the case of the non-sequential data access, the data to which access will be gained next is stored in an address (another entry in many cases) that is distant maintaining a predetermined stride from the address of the preceding data. Therefore, even when one entry of data is replaced according to a processing at the time of a cache miss, the other data (element) of the replaced entry is seldom hit by the subsequent access. That is, one entry of data read out from the main memory becomes useless excepting the data in the cache-miss state. Therefore, the processing time is lengthened by gaining access to the useless data and the efficiency of the system as a whole is lowered.

## DISCLOSURE OF THE INVENTION

It is, therefore, an object of the present invention to improve the efficiency of the system in which a processor is connected to the cache memory to gain access to particular data such as vector data by reducing the penalty at the time of a cache miss in effecting non-sequential data access and, hence, by realizing a high-speed operation.

In order to accomplish this object according to the present invention, the cache memory is controlled by recognizing that the kind of access to the vector data (sequential data access or non-sequential data access) has generally been determined at the time of starting the access and by utilizing the information thereof.

According to a first aspect of the present invention, therefore, there is provided a processor that gains access to data in a cache memory, comprising a unit for outputting a discrimination signal that indicates whether the access made to said the cache memory is a sequential address data access or a non-sequential address data access, to thereby control said cache memory.

According to a second aspect of the present invention, furthermore, there is provided a system comprising a cache memory connected to a processor and a main memory, wherein said processor has a unit for outputting a discrimination signal that indicates whether access made to said cache memory is a sequential address data access or a non-sequential address data access, and said cache memory has a unit for changing the processing in a cache-miss state depending upon said discrimination signal, thereby suppressing unnecessary access to said main memory in the case of non-sequential address data access.

According to a third aspect of the present invention, there is provided a method of controlling a cache memory in a system equipped with said cache memory connected to a processor and with a main memory, comprising a step of sending a discrimination signal from said processor to said cache memory indicating whether the access is a sequential address data access or a non-sequential address data access, and a step of changing the processing in a cache-miss state when said discrimination signal is indicating the non-sequential address data access in a cache-miss state.

According to the aforementioned constitution (second aspect of the present invention), the discrimination signal indicating the kind of access is sent from the processor to the cache memory, and the processing in a cache-miss state is changed depending upon the discrimination signal. That is, in the case of the non-sequential data access, unnecessary access to the main memory is suppressed. Therefore, the processing time is shortened by an amount by which the useless access is suppressed, and the efficiency of the system as a whole is improved.

Actions and effects of the first aspect and third aspect of the present invention as well as other structural features and actions of the present invention will be described below in detail by way of an embodiment with reference to the accompanying drawings.

## BRIEF DESCRIPTION OF DRAWINGS

Figs. 1a and 1b are diagrams illustrating a control mode in cache-hit state in the conventional sequential data access;
Figs. 2a and 2b are diagrams illustrating a control mode in cache-miss state in the conventional sequential data access;
Figs. 3a and 3b are diagrams illustrating a control mode in a cache-hit state in the conventional non-sequential data access;

Figs. 4a and 4b are diagrams illustrating a control mode in a cache-miss state in the conventional non-sequential data access:

Fig. 5 is a diagram illustrating the principle and constitution of a cache memory control system according to the present invention;

Fig. 6 is a block diagram that schematically illustrates a constitution to which the cache memory control system of the present invention is adapted;

Fig. 7 is a block diagram that illustrates in detail the constitution of the system of Fig. 6;

Fig. 8 is a block diagram that illustrates in detail the constitution of the processor of Fig. 7;

Fig. 9 is a block diagram that illustrates in detail the constitution of an address unit of Fig. 8;

Figs. 10a and 10b are diagrams illustrating a control mode in cache-hit state in the non-sequential data access according to an embodiment of the present invention; and

Figs. 11a and 11b are diagrams illustrating a control mode in cache-miss state in the non-sequential data access according to the embodiment of the present invention.

BEST MODE FOR CARRYING OUT THE INVENTION

For a better understanding of the embodiment of the present invention, first, problems inherent in the prior art will be described with reference to Figs. 1a to 4b.

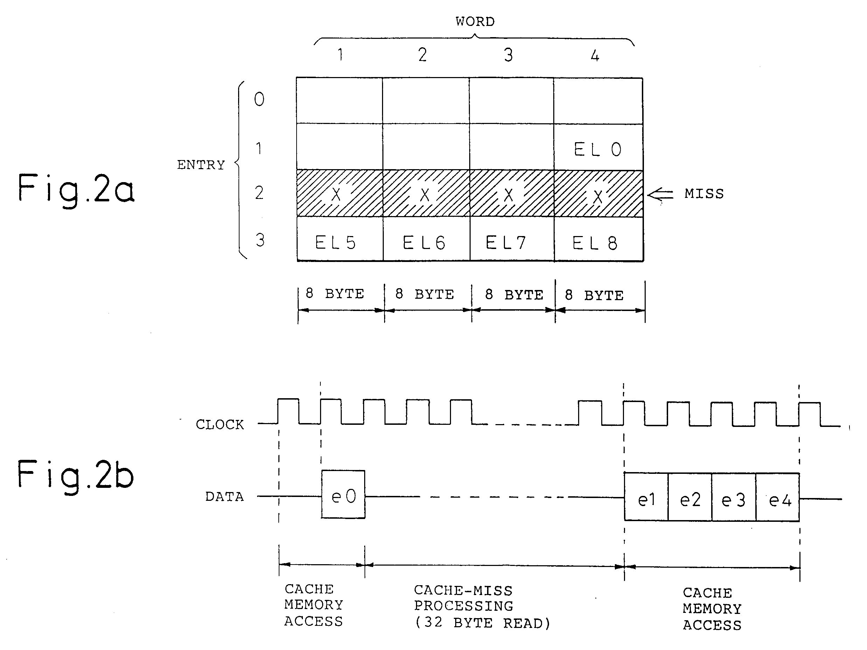

Figs. 1a, 1b, 2a and 2b illustrate cache memory control modes during the sequential data access according to the prior art.

In this case as shown in Fig. 1a, the vector data are sequentially stored from the fourth word (element 0; EL0) of an entry 1 in the cache memory.

In the case of a cache hit as shown in Fig. 1b, access is made sequentially to the elements (e0 to e8) in response to clocks.

In the case of a cache miss, for example, in the case of a cache miss at an element 1 (EL1) shown in Fig. 2a, the corresponding entry (elements 1 to 4; EL1 to EL4) is read out from the main memory and is stored in the corresponding region of the cache memory. In this case, 8 bytes of data are read out during one access to the main memory. Therefore, access of the main memory is gained four times, and one entry of data (32 bytes) are read out and replaced by a corresponding entry in the cache memory.

In this case, the substituted entry includes the following elements 2 to 4 (EL2 to EL4) and is necessarily hit when access is made to the elements 2 to 4. That is, the data to which access will be gained next is stored in an address neighboring the address of the preceding data. Therefore, even when one entry of data are replaced according to the processing in a cache-miss state, the data of the replaced entry are reliably hit by the subsequent access.

When sequential data access is made as described above, the efficiency of the system as a whole decreases slightly even when a processing (i.e., access to the main memory) similar to that of the ordinary cache memory is carried out.

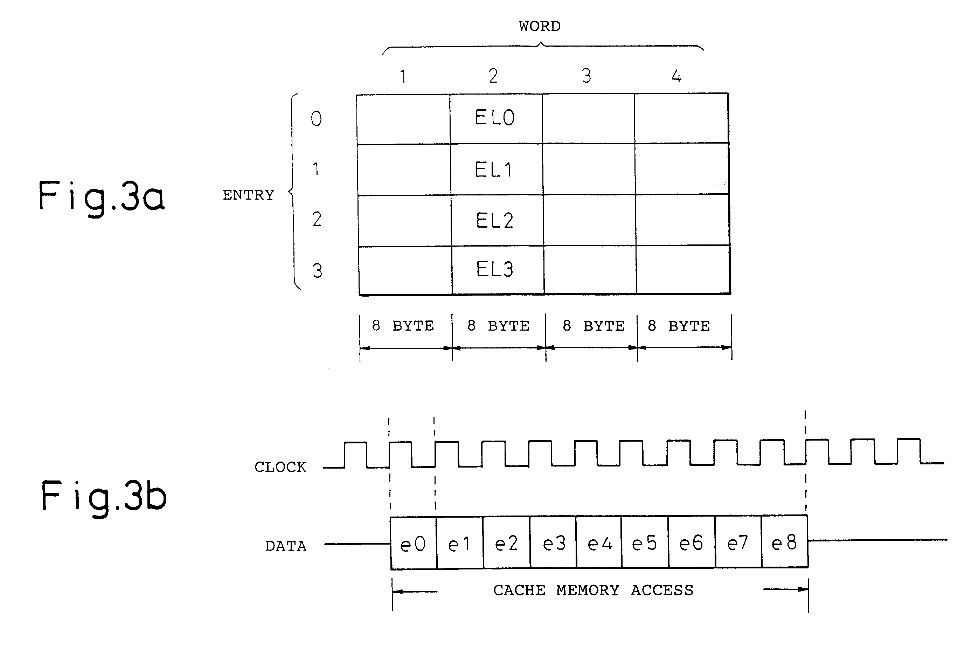

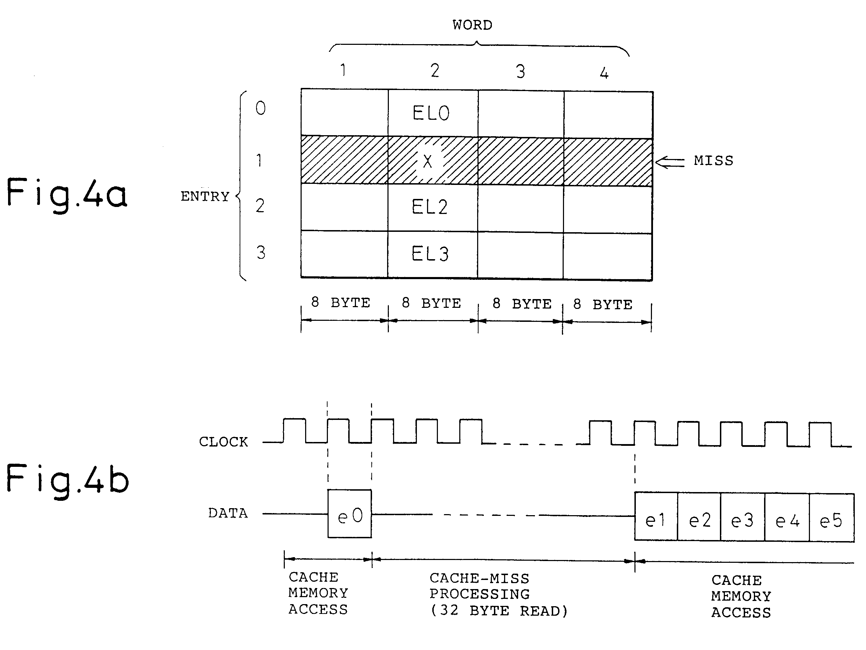

Next, the cache memory control modes at the time of non-sequential data access will be described with reference to Figs. 3a, 3b, 4a and 4b.

In the diagram of the embodiment, the elements of vector data are arranged maintaining a distance (stride) of 32 bytes. In this case, since the distance is the same as the line size of the cache memory, the elements (EL0 to EL3) of vector data are arranged in a vertical direction at positions of the second words of the entries as shown in Fig. 3a.

In the case of a cache hit as shown in Fig. 3b, access of the elements (e0 o e8) is sequentially gained in response to clocks.

On the other hand, in the case of a cache miss, for example, in the case of a cache miss at the element 1 (EL1) of Fig. 4a, one entry of data (32 bytes) including the above element are read out from the main memory four access times and are replaced by a corresponding entry in the cache memory.

What is needed by the above entry however is one word of element data (EL1) of the element, and the subsequent elements jump to other entries. Therefore, other words of the replaced entry are not hit by the subsequent access. That is, among 32 bytes of data read out from the main memory, 24 bytes of data (corresponding to three access times) become useless. In other words, the processing time is lengthened by an amount of the access gained to the useless data, and the efficiency of the system decreases as a whole.

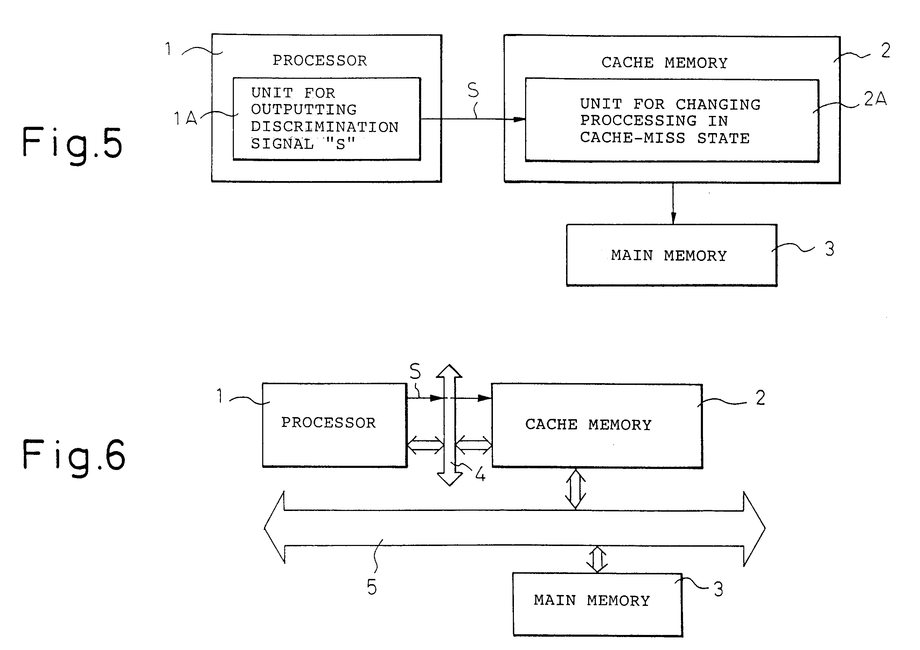

Fig. 5 illustrates the principle and constitution of the cache memory control system according to the present invention, wherein reference numeral 1 denotes a processor that gains access to particular data such as vector data; 2 denotes a cache memory connected to said processor, and 3 denotes a main memory that exchanges data relative to the cache memory.

The processor 1 has a unit 1A for outputting a discrimination signal S that indicates whether access gained to the cache memory 2 is a sequential data access or a non-sequential data access, and the cache memory 2 has a unit 2A for changing processing in a cache-miss state based upon the discrimination signal. In the case of the non-sequential data access, unnecessary access to the main memory 3 is suppressed.

A concrete embodiment of the present invention will now be described with reference to Figs. 6 to 11b.

Fig. 6 schematically illustrates the constitution of a system to which the cache memory control system of the present invention is adapted.

In Fig. 6, reference numeral 1 denotes a 1-chip vector operation type processor LSI; 2 denotes a cache memory that receives access control from the processor via a processor bus 4, and 3 denotes a main memory that exchanges data and addresses relative to the cache memory 2 via a memory bus 5.

At the time of starting access to the cache memory 2, the processor 1 outputs to the cache memory 2 a signal S (hereinafter referred to as non-sequence access discrimination signal) that indicates the kind of access (i.e., whether it is a sequential data access or a non-sequential data access). Upon receipt of the non-sequence access discrimination signal S, the cache memory 2 changes processing in a cache-miss state. Concretely speaking, when the non-sequence access discrimination signal S is indicating non-sequential data access, the cache memory 2 does not update the entry that is in a miss state but gains access directly to the data in the main memory 3.

When the processor 1 gains a sequential data access to the cache memory 2, the non-sequence access discrimination signal S is negated and the operation is performed in the same manner as the conventional cache memory.

In the case of the non-sequential data access, on the other hand, the processor 1 asserts the non-sequence access discrimination signal S and informs the cache memory 2 of the non-sequential access. The control mode of the cache memory of this case will be described later.

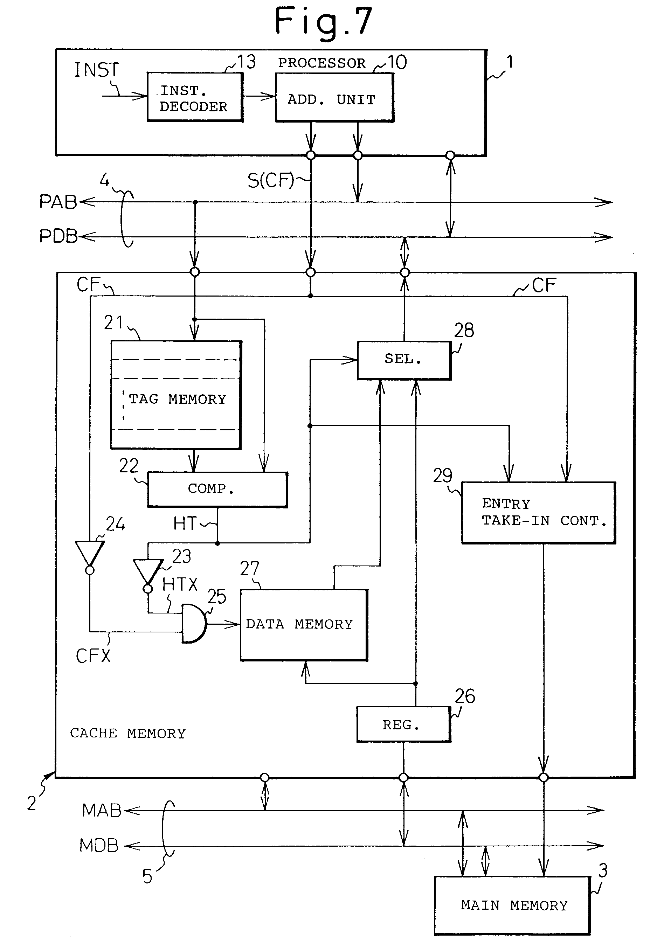

Fig. 7 illustrates in detail the constitution of the system of Fig. 6, wherein the processor 1 and the cache memory 2 are connected together via a processor bus 4 (address bus PAB and data bus PDB), and the cache memory 2 and the main memory 3 are connected together via a memory bus 5 (address bus MAB and data bus MDB).

As will be described later in detail, the processor 1 has, as part of its constituent elements, an instruction decoder 13 for decoding instruction INST and an address unit 10 that forms the non-sequence access discrimination signal S and effects address conversion based upon the decoded result. As will be described later, the non-sequence access discrimination signal S is used to temporarily freeze or stop the function of the cache memory 2 when asserted and, in this sense, is also called a cache freeze signal CF in the following description.

The cache memory 2 has a tag memory 21 that stores addresses corresponding to the entries taken in via the processor address bus PAB, a comparator 22 that compares the content of the tag memory with the address taken in through the address bus PAB and outputs a cache hit signal (signal HT of the "H" level) when the address that is taken in exists in the addressess stored in the tag memory 21, an inverter 23 that forms an inverted signal HTX of the output of said comparator, an inverter 24 that forms an inverted signal CFX of the cache freeze signal CF from the processor 1, an AND gate 25 that forms a cache freeze control signal in response to the outputs of the inverters 23 and 24, a register 26 that temporarily stores the data taken in via the memory data bus MDB based upon the entry take-in control, which will be mentioned later, a data memory 27 that takes in the data from the register 26 in response to the cache freeze control signals from the AND gate 25, a selector 28 that selects either the data from the data memory 27 or the data from the register 26 depending upon the output HT of the comparator 22 and sends it to the processor data bus PBD, and an entry take-in control circuit 29 that controls the take-in of one entry of data from the main memory 3 depending upon the output HT of the comparator 22 and the cache freeze signal CF.

In this constitution, when the cache freeze signal CF is negated (i.e., inverted signal CFX has the "H" level) in a cache-miss state (i.e., inverted signal HTX has the "H" level) during the sequential data access, the output (cache freeze control signal) of the AND gate 25 assumes the "H" level, and the data memory 27 receives the data from the register 26 in response thereto. On the other hand, when the cache freeze signal CF is asserted (i.e., inverted signal CFX has the "L" level) during the non-sequential data access or in the case of a cache-hit (i.e., inverted signal HTX has the "L" level), the above cache freeze control signal becomes invalid (L level) and the memory 27 inhibits the take-in of data from the register 26. Further, the selector 28 selects and outputs the data from the data memory 27 when the output HT of the comparator 22 has the "H" level (i.e., in the case of a cache hit), and selects and outputs the data from the register 26 when the output HT of the comparator 22 has the "L" level (i.e., in the case of a cache miss).

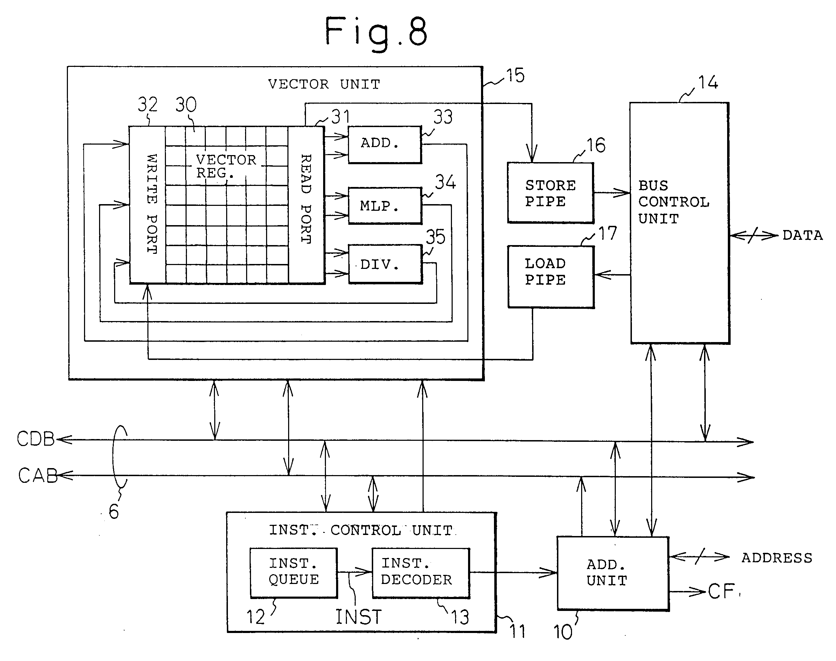

Fig. 8 illustrates in detail the constitution of the processor 1.

The diagram of the processor is a 1-chip vector operation type processor LSI as described above and comprises a chip bus 6 (address bus CAB and data bus CDB), an address unit 10 connected to the chip bus 6, an instruction control unit 11 connected to the chip bus 6, a bus control unit 14 connected to the chip data bus CDB, a vector unit 15 connected to the chip bus 6, and a store pipe 16 and a load pipe 17 that are connected between the vector unit and the bus control unit 14 to control the pipeline processing. Here, the instruction control unit 11 has an instruction queue (buffer) 12 that issues an instruction INST and an instruction decoder 13 that decodes the instruction INST and sends the decoded result to the address unit 10.

The vector unit 15 has a vector register 30 for storing the vector data, a read port 31 for reading out the data from the vector register, a write port 32 for newly writing data onto the vector register 30, an adder 33, a multiplier 34 and a divider 35 that effect the addition, multiplication and division of data that are read out via the read port 31. The aforementioned store pipe 16 stores the data read out from the vector register 30 via the read port 31 and sends the data to the bus control unit 14 after having effected a suitable pipeline processing. The load pipe 17, on the other hand, loads the data that are taken in from the processor data bus PDB via bus control unit 14, similarly effects a suitable pipeline processing, and sends the data to the write port 32.

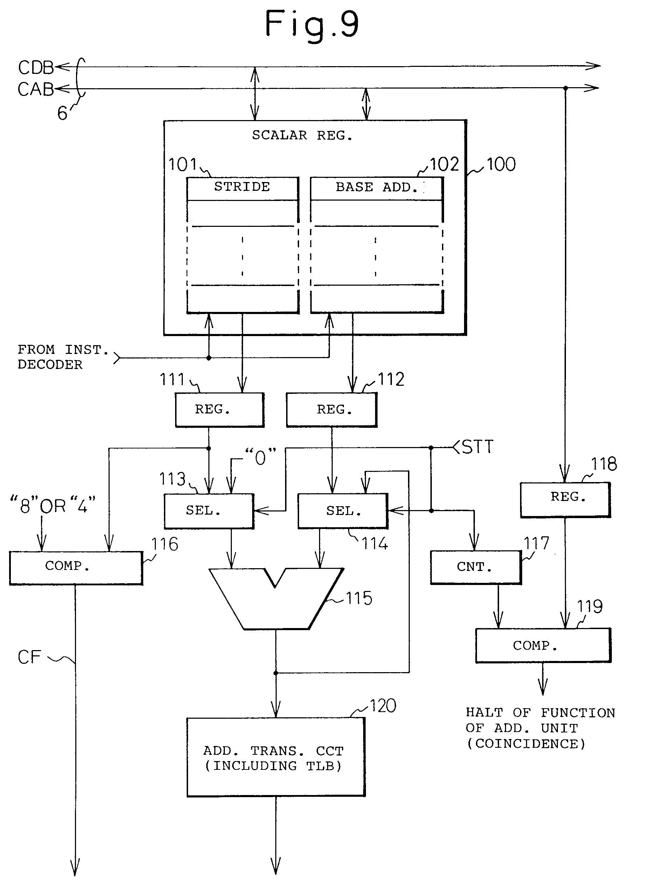

Fig.9 illustrates in detail the constitution of the address unit 10.

The address unit that is diagramed comprises a scalar register 100 having registers 101 and 102 which, respectively, store strides and base addresses that aretaken in via chip data bus CDB and address bus CAB and output corresponding stride information and base address information depending upon the decoded result of the instruction decoder 13, registers 111 and 112 that temporarily store strides and base address read out from said registers 101 and 102, a selector 113 that selectively outputs either the data "0" or the data from the register 111 depending upon a load/store start signal STT, a selector 114 that selectively outputs either the data from the register 112 or the output data of an adder that is described below depending upon the load/store start signal STT, an adder 115 that adds output data of the selectors 113 and 114, a comparator 116 that compares the content of the register 111 with data "8" or "4$ to output the aforementioned cache freeze signal CF, a counter 117 that inputs the load/store start signal STT and counts the address that corresponds to the vector length (length of vector data), a register 118 that stores the data of a vector length taken in via the chip address bus CAB, a comparator 119 that compares the content of said register with the counted value of the counter 117, and an address translation circuit 120 that has a buffer (TLB) with an address translation table and carries out address translation based on the output of the adder 115 by making reference to the above table.

In this constitution, the cache freeze signal CF is negated when the content of the register 111 is in agreement with the aforementioned predetermined data (data "8" indicating 8-byte distance in the case of double precision data or data "4" indicating 4-tyte distance in the case of single precision data) in the comparator 116 (i.e., when the processor 1 makes a sequential data access to the cache memory 2), and is asserted when they are not in agreement with each other (i.e., in the case of non-sequential data access). furthermore, when the counted value (address corresponding to the vector length) of the counter 117 is in agreement with the content of the register 118, the comparator 119 produces a control signal for halting the function of the address unit 10. Moreover, the load/store start signal STT is produced at the start of reading the data out from the registers 101 and 102 in the scalar register 100. In this case, the above selectors 113 and 114, respectively, select and output data "0" and data from the register 112 at a moment when the load/store start signal STT is output, and then select and output data from the register 111 and output data from the adder 115.

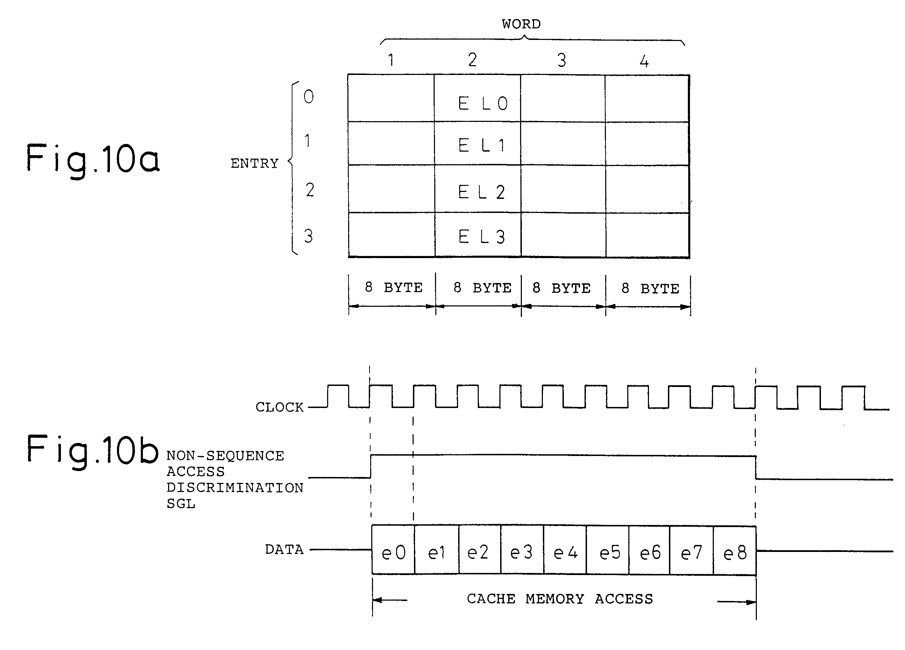

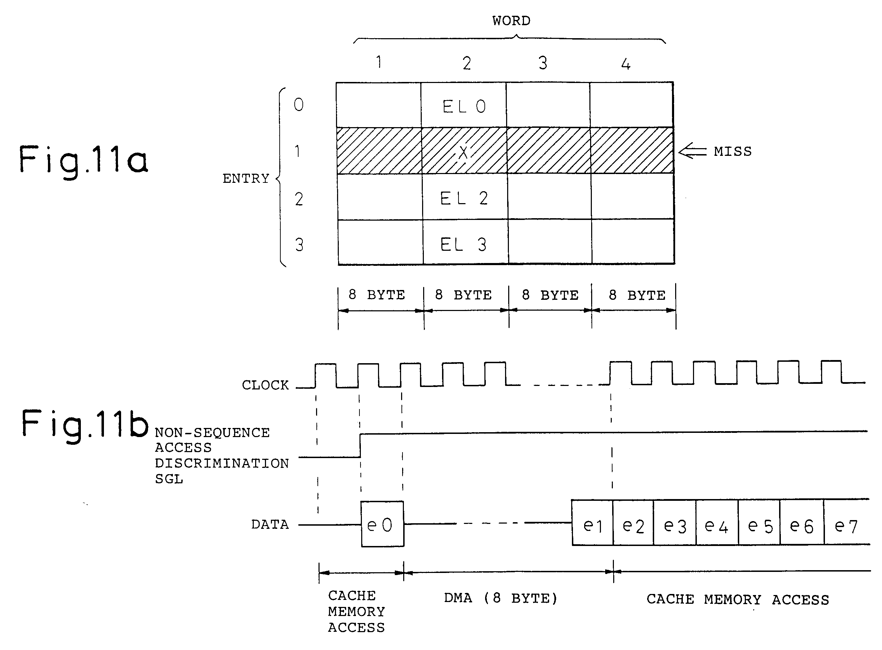

Next, the cache memory control modes at the time of non-sequential data access will be described with reference to Figs. 10a, 10b, 11a and 11b.

In the diagramed example, the elements of vector data are arranged maintaining a gap (distance) of 32 bytes, the elements (EL0 to EL3) of vector data being arranged in the vertical direction at positions of the second words of the entries as shown in Fig. 10a.

In the case of a cache hit as shown in fig. 10b access, of the elements (e0 to e8) is made sequentially to in response to the clocks.

On the other hand, in the case of a cache miss, for example, in the case of a cache miss at the element 1 (EL1) shown in fig. 11a, the non-sequence access discrimination signal S is asserted and the entry that includes the above element of a cache miss (entry 1 in the diagramed embodiment) is not updated and the element (EL1) is directly read out (in the case of reading operation) from the main memory 3. Therefore, the intial data are maintained under the condition that the entry 1 in the cache memory 2 is in a miss state. In the case of the writing operation, similarly, the entry in the cache memory 2 is not replaced in a cache-miss state but is dirctly written onto the main memory 3.

The above control operation makes it possible to reduce the number of access times to the main memory 3 in a cache-miss state at the time of non-sequential data access from four times (corresponding to data of 32 bytes) down to one time (corresponding to data of 8 bytes), and the time needed for the cache-miss processing is reduced to one-fourth.

In this case, the entry 1 in the cache memory 2 remains in a cache-miss state but to which no access is gained at the time of access to the next element. Moreover, access of this entry seldom gained at the time when access is made to the next vector data.

According to the control mode of this embodiment as described above, the cache memory 2 is informed of the kind of access (i.e., sequential data access or non-sequential data access) from the processor1 at the time of memory access. In the case of non-sequential data access, unnecessary access to the main memory 3 is suppressed making it possible to reduce the penalty at the time of a cache miss without decreasing the hit rate of the cache memory 2. As a result, a high-speed operation is realized and the efficiency of the system as a shole can be improved.

| List of Reference Marks and Particulars | |
|---|---|
| Reference Marks | Particulars |
| 1 | processor |
| 1A | unit for outputting discrimination signal "S" |
| 2 | cache memory |
| 2A | unit for changing processing in cache-miss state |
| 3 | main memory |
| 10 | address unit |
| 21 | tag memory |
| 22,116,119 | comparator |
| 26,101,102,111,112, 118 | register |
| 27 | data memory |
| 28,113,114 | selector |
| 29 | entry take-in control circuit |
| 117 | counter |
| S | non-sequence access discrimination signal |
| CF | cache freeze signal |
| HT | hit/miss indication signal |

## Claims

1. A processor (1) that gains access to data in a cache memory (2), comprising means (1a, 10) for outputting a discrimination signal (S, CF) that indicates whether access gained to said cache memory is sequential address data access or a non-sequential address data access, to thereby control said cache memory.

2. A processor according to claim 1, wherein a provision is further made of an instruction control means (12, 13) that issues an instruction (INST) and decodes said instruction, to thereby output said discrimination signal based upon said decoded result.

3. A processor according to claim 2, wherein said means (10) for outputting said discrimination signal comprises
means (101) that stores a plurality of stride information that is taken in via internal buses (CDB, CAB) and indicates distance among the elements f vector data, and outputs stride information depending upon the decoded result of said instruction control means; and
means (116) that compares the value of said output stride information with a predetermined data value ("8", "4");
wherein said discrimination signal (CF) is asserted when the two values do not coincide with each other as a result of said comparison.

4. A processor according to claim 3, wherein said means (10) that outputs said discrimination signal negates said discrimination signal (CF) when the two values coincide with each other as a result of said comparison.

5. A processor according to claim 3, wherein said means (10) that outputs said discrimination signal comprises

means (102) that stores a plurality of base address information that is taken in via internal buses (CDB, CAB) and indicates a reference address of vector data, and outputs base address information depending upon the decoded result of said instruction control means;

a first selection means (113) that selectively outputs a predetermined data value ("0") or a value of said output stride information;

a second selection means (114) that selectively outputs the value of said output base address information or the value of added data;

means (115) that adds up the data selectively output by said first and second selection units and forms said added data; and

means (12) that has a buffer with a table for address translation, and effects address translation processing based upon said added data formed by making reference to said table.

6. A processor according to claim 5, wherein said first and second selection means selectively output said predetermined data value and the value of said output base address information at a moment when the load/store of the vector data is started, and selectively output the value of said output stride information and said added data after said load/store operation is started.

7. A processor according to claim 5, wherein said means (10) that outputs said discrimination signal comprises

a counter means (117) that commences the counting operation when the load/store of vector data is started;

a register means (118) that stores the data depending upon the length of vector data taken in via internal buses; and

means (119) that compares a value of data stored in said register means with a counted value of said counter means;

wherein the function of the means that outputs said discrimination signal is halted when the two values coincide with each other as a result of said comparison.

8. A processor according to any one of claims 1 to 7, wherein said processor is a one-chip vector operation type processor.

9. a system comprising a cache memory (2) connected to a processor (1) and a main memory (3), wherein:

said processor has means (1A, 10) for outputting a discrimination signal (s, CF) that indicates whether access to said cache memory is a sequential access data access or a non-sequential address data access; and

said cache memory has means for changing the processing in a cache-miss state depending upon said discrimination signal that is output;

whereby in the case of non-sequential address data access, unnecessary access to said main memory is suppressed.

10. a system according to claim 9, wherein in said cache memory, the elements of said data are arranged maintaining a distance that inhibits access to the entry in a miss state when access is made to the next element.

11. A system according to claim 9, wherein said means for changing the processing in a cache-miss state is provided with means (29, 26, 28) that gain access directly to said main memory without updating the entry that is in a miss state when said discrimination signal is asserted.

12. A system according to claim 11, wherein said means that gains access directly to said main memory comprises

means (29) that controls the take-in of one entry of data from said main memory when said discrimination signal is asserted;

a register means (26) that temporarily stores the data taken in via the external bus (MDB) based upon the control of the take-in of data; and

a selection means (28) that selects said temporarily stored data in a cache-miss state and sends it to said processor.

13. a system according to claim 12, wherein said cache memory comprises

a first memory means (21) for storing addresses corresponding to entries that are taken in via the external bus (PAB);

means (22) that compares said stored addresses with addresses taken in via said external bus; and

a second memory means (27) that takes in data from said register means when said discrimination signal is negated in the cache-miss state;

wherein, depending upon the result f said comparison, said selection means selectively outputs the data from said second memory means in the case of a cache hit state and selectively outputs the data from said register means in the case of a cache miss state.

14. A system according to claim 13, wherein said processor comprises

an instruction control means (12, 13) that issues an instruction (INST) and decodes said instruction;

means (101) that stores a plurality of stride informations taken in via internal buses (CDB, CAB) and indicates a distance among the elements of vector data, and outputs stride information depending upon the decoded result of said instruction control means; and

means (116) that compares the value of said output stride information with a predetermined data value ("8", "4");

wherein, depending upon the result of said comparison, said discrimination signal (CF) is asserted when the two values do not coincide with each other, and said discrimination signal (CF) is negated when the two values coincide with each other.

15. A method of controlling a cache memory in a system equipped with said cache memory connected to a processor (1) and with a main memory (3), comprising

a step of sending a discrimination signal from said processor to said cache memory said discrimination signal indicating whether the access is a sequential address data access or a non-sequential address data access; and

a step of changing the processing in a cache-miss state when said discrimination signal indicates the non-sequential address data access in the cache-miss state.

16. A control method according to claim 15, wherein said step of changing the processing in a cache-miss state has a step of gaining access directly to said main memory without updating the entry that is in a miss state when said discrimination signal is asserted.

17. A control method according to claim 16, wherein said step of gaining access directly to said main memory comprises

a step of controlling the take-in of one entry of data from said main memory when said discrimination signal is asserted;

a step of taking in the data from the external bus to temporarily store the data based on the control of take-in of the data; and

a step of selecting the temporarily stored data to send the data to said processor in a cache-miss state.

# Fig.1a

WORD

| | 1 | 2 | 3 | 4 |
|---|---|---|---|---|
| 0 | | | | |
| 1 | | | | E L 0 |
| 2 | E L 1 | E L 2 | E L 3 | E L 4 |
| 3 | E L 5 | E L 6 | E L 7 | E L 8 |

ENTRY

8 BYTE | 8 BYTE | 8 BYTE | 8 BYTE

# Fig.1b

CLOCK

DATA — | e0 | e1 | e2 | e3 | e4 | e5 | e6 | e7 | e8 |

CACHE MEMORY ACCESS

EP 0 502 206 A1

# Fig.2a

WORD

ENTRY

| | 1 | 2 | 3 | 4 | |
|---|---|---|---|---|---|
| 0 | | | | | |
| 1 | | | | EL 0 | |
| 2 | X | X | X | X | ← MISS |
| 3 | EL 5 | EL 6 | EL 7 | EL 8 | |

| 8 BYTE | 8 BYTE | 8 BYTE | 8 BYTE |

# Fig.2b

CLOCK

DATA

| e 0 | | e 1 | e 2 | e 3 | e 4 |

CACHE
MEMORY
ACCESS

CACHE-MISS
PROCESSING
(32 BYTE READ)

CACHE
MEMORY
ACCESS

EP 0 502 206 A1

Fig.3a

WORD

ENTRY

|   | 1 | 2 | 3 | 4 |
|---|---|---|---|---|
| 0 |   | EL0 |   |   |
| 1 |   | EL1 |   |   |
| 2 |   | EL2 |   |   |
| 3 |   | EL3 |   |   |

8 BYTE | 8 BYTE | 8 BYTE | 8 BYTE

Fig.3b

CLOCK

DATA — e0 | e1 | e2 | e3 | e4 | e5 | e6 | e7 | e8

CACHE MEMORY ACCESS

Fig.4a

Fig.4b

EP 0 502 206 A1

EP 0 502 206 A1

Fig.5

1 — PROCESSOR

1A — UNIT FOR OUTPUTTING DISCRIMINATION SIGNAL "S"

S

2 — CACHE MEMORY

2A — UNIT FOR CHANGING PROCCESSING IN CACHE-MISS STATE

3 — MAIN MEMORY

Fig.6

1 — PROCESSOR

S

4

2 — CACHE MEMORY

5

3 — MAIN MEMORY

# Fig.7

# Fig.8

EP 0 502 206 A1

# Fig.9

CDB

CAB

6

SCALAR REG.

101  STRIDE   BASE ADD.  102  100

FROM INST.
DECODER

111  REG.     REG.  112

"0"       STT

113           118

"8"OR"4"        SEL.    SEL.      REG.

116   114

COMP.    115

CF   CNT.  117

120

ADD. TRANS. CCT
(INCLUDING TLB)

119

COMP.

HALT OF FUNCTION
OF ADD. UNIT
(COINCIDENCE)

## Fig.10a

WORD

|   | 1 | 2 | 3 | 4 |
|---|---|---|---|---|
| 0 |   | E L 0 |   |   |
| 1 |   | E L 1 |   |   |
| 2 |   | E L 2 |   |   |
| 3 |   | E L 3 |   |   |

ENTRY

| 8 BYTE | 8 BYTE | 8 BYTE | 8 BYTE |

## Fig.10b

CLOCK

NON-SEQUENCE
ACCESS
DISCRIMINATION
SGL

DATA

| e0 | e1 | e2 | e3 | e4 | e5 | e6 | e7 | e8 |

CACHE MEMORY ACCESS

## Fig.11a

WORD

| | 1 | 2 | 3 | 4 |
|---|---|---|---|---|
| 0 | | EL 0 | | |
| 1 | | X | | |  ← MISS
| 2 | | EL 2 | | |
| 3 | | EL 3 | | |

ENTRY

| 8 BYTE | 8 BYTE | 8 BYTE | 8 BYTE |

## Fig.11b

CLOCK

NON-SEQUENCE
ACCESS
DISCRIMINATION
SGL

DATA — [e 0] — — — [e1][e2][e3][e4][e5][e6][e7]

| CACHE MEMORY ACCESS | DMA (8 BYTE) | CACHE MEMORY ACCESS |

# INTERNATIONAL SEARCH REPORT

International Application No PCT/JP91/01240

**I. CLASSIFICATION OF SUBJECT MATTER** (if several classification symbols apply, indicate all) *

According to International Patent Classification (IPC) or to both National Classification and IPC

Int. Cl$^5$  G06F12/08, 12/12

**II. FIELDS SEARCHED**

Minimum Documentation Searched [7]

| Classification System | Classification Symbols |
|---|---|
| IPC | G06F12/08, 12/12 |

Documentation Searched other than Minimum Documentation
to the Extent that such Documents are Included in the Fields Searched [8]

| | |
|---|---|
| Jitsuyo Shinan Koho | 1971 – 1991 |
| Kokai Jitsuyo Shinan Koho | 1971 – 1991 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 59-214977 (Hitachi, Ltd.), December 4, 1984 (04. 12. 84), (Family: none) | 1-17 |
| A | JP, A, 62-47756 (NEC Corp.), March 2, 1987 (02. 03. 87), (Family: none) | 1-17 |
| A | JP, A, 61-264455 (Fujitsu Ltd.), November 22, 1986 (22. 11. 86), (Family: none) | 1-17 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 2, 1991 (02. 12. 91) | December 24, 1991 (24. 12. 91) |

| International Searching Authority | Signature of Authorized Officer |
|---|---|
| Japanese Patent Office | |

Form PCT/ISA/210 (second sheet) (January 1985)